# EUROPEAN PATENT APPLICATION

(11) **EP 4 354 552 A1**
(43) Date of publication of application: **17.04.2024**
(21) Application number: 22894615.8
(22) Date of filing: 31.10.2022
(51) Int. Cl.: H01M 4/62, H01M 4/134

(54) **METAL LITHIUM NEGATIVE ELECTRODE, SECONDARY BATTERY, BATTERY MODULE, BATTERY PACK, AND ELECTRIC DEVICE**

(30) Priority: 18.11.2021 CN 202111367364
(71) Applicant: Contemporary Amperex Technology Co., Limited, Ningde, Fujian 352100 (CN)
(72) Inventor: ZHU, Qingqing, Ningde, Fujian 352100 (CN); TANG, Daichun, Ningde, Fujian 352100 (CN)
(74) Representative: Ziebig Hengelhaupt Intellectual Property Attorneys Patentanwaltskanzlei PartGmbB
(86) International application number: PCT/CN2022/128481
(87) International publication number: WO 2023/088078

(57) **Abstract**

A lithium metal negative electrode, a secondary battery (8), a battery module, a battery pack (4), and an electric apparatus are provided. The lithium metal negative electrode includes a substrate (1), lithium metal (2), and a fiber layer (3). The substrate (1) includes a copper mesh (11). The copper mesh (11) is plated with the lithium metal (2). The copper mesh (11) and the fiber layer (3) are composited. The copper mesh (11) serves as a substrate support structure for supporting the lithium metal (2). In a charge and discharge cycle of a battery, the lithium metal (2) tends to deposit in pores of the copper mesh (11), suppressing overgrowth of lithium dendrites, thereby avoiding the risks such as separator puncture, irreversible capacity loss, or even separator puncture caused by dead lithium formed.

## Description

This application claims priority to Chinese Patent Application No. 202111367364.X filed on November 18, 2021, which is incorporated herein by reference in its entirety.

### TECHNICAL FIELD

This application relates to the field of electrochemical technologies, and in particular, to a lithium metal negative electrode, a secondary battery, a battery module, a battery pack, and an electric apparatus.

### BACKGROUND

Lithium metal has extremely high theoretical capacity and quite low redox potential, making it an ideal negative electrode material for lithium-ion batteries. Lithium batteries using lithium metal as a negative electrode have great application prospect in the development of future chemical power sources. However, lithium metal used as a negative electrode in a battery poses safety risks. In a charge and discharge process, with continuous deposition and dissolution of lithium metal, lithium dendrites are easily produced. Overgrown lithium dendrites not only become "dead lithium", causing irreversible capacity loss, but also puncture a separator, causing a short circuit in the battery and posing a fire risk.

### SUMMARY

### Technical problem

This application provides a lithium metal negative electrode, a secondary battery, a battery module, a battery pack, and an electric apparatus, so as to solve the problems that in an existing battery using lithium metal as a negative electrode, lithium dendrites are easily produced, and overgrown lithium dendrites not only become "dead lithium", causing irreversible capacity loss, but also puncture a separator, causing a short circuit in the battery and posing a fire risk.

### Solutions of problems

### Technical solution

This application provides a lithium metal negative electrode. The lithium metal negative electrode includes a substrate, lithium metal, and a fiber layer. The substrate includes a copper mesh. The copper mesh is plated with the lithium metal. The copper mesh and the fiber layer are composited.

The copper mesh serves as a substrate support structure for supporting the lithium metal. In a charge and discharge cycle of a battery, the lithium metal tends to deposit in pores of the copper mesh, suppressing overgrowth of lithium dendrites, thereby avoiding the risks such as separator puncture and irreversible capacity loss. The fiber layer is provided on the lithium metal negative electrode, the copper mesh is plated with the lithium metal, and then the fiber layer and the copper mesh are composited, so that the fiber layer can serve as a support structure for the copper mesh, further improving support stability of the copper mesh as well as protecting the lithium metal.

In a possible design, the copper mesh has a pore area of 1×10⁻⁴ mm² to 4×10⁻⁴ mm².

Reasonable selection of the pore area of the copper mesh can not only guarantee energy density of the negative electrode, but also provide deposition space for the lithium metal. When the pore area of the copper mesh is less than 1×10⁻⁴ mm², pores of the copper mesh are too small to provide sufficient deposition space for the lithium metal, failing to effectively suppress growth of lithium dendrites. When the pore area of the copper mesh is greater than 4×10⁻⁴ mm², the negative electrode has insufficient strength, easily causing problems such as collapse and deformation.

In a possible design, a single copper wire in the copper mesh has a diameter of 1 mm to 2 mm.

Reasonable selection of the diameter of a single copper wire in the copper mesh can effectively guarantee strength of the copper mesh, thus providing stable support for the lithium metal.

In a possible design, the substrate further includes copper foils, where the copper foils are connected to two sides of the copper mesh.

The copper foils provided on the two sides of the copper mesh can serve as current collectors and be cut into negative electrode tabs for preparation of a lithium negative electrode plate of a wound structure.

In a possible design, the fiber layer has a thickness of 1 mm to 2 mm.

Reasonable selection of the thickness of the fiber layer can provide better protection for the lithium metal.

This application provides a preparation method of lithium metal negative electrode. The preparation method includes the following steps:
preparing a copper mesh;
performing surface treatment on the copper mesh to remove a surface oxide layer, and then plating the copper mesh with lithium metal; and
compositing a fiber layer and the copper mesh plated with the lithium metal to prepare a lithium metal negative electrode.

The copper mesh, as a substrate, is plated with the lithium metal on the surface, and then the fiber layer and the copper mesh are composited. During cycling, lithium tends to deposit in the pores of the copper mesh, suppressing overgrowth of lithium dendrites and avoiding risks such as separator puncture.

In a possible design, the copper mesh is plated with the lithium metal at a speed of 20 µA to 40 µA for 4 h to 8 h.

Reasonable selection of the speed for plating the copper mesh with the lithium metal can ensure uniform lithium plating and avoid falling of the lithium metal caused by non-uniform lithium plating.

In a possible design, the fiber layer is a glass fiber layer, a polypropylene fiber layer, a polyacrylonitrile fiber layer, or a polyester fiber layer.

In a possible design, the compositing is implemented through a rolling method or a chemical crosslinking method.

The fiber layer and the copper mesh are composited through a rolling method or a chemical crosslinking method, so that the copper mesh is supported and the lithium metal is protected.

In a possible design, the chemical crosslinking method includes the following steps:
dispersing an initiator and polymer monomers in an organic solvent to produce a mixed solution; and applying the mixed solution onto the copper mesh plated with the lithium metal; where under the action of the initiator, a polymerization reaction takes place, forming the fiber layer on the copper mesh.

Spaces between meshes of the copper mesh are used for accurately positioning the polymer monomers on the surface of the lithium metal, and the polymer monomers, with the aid of the initiator, can form a dense protective layer on the surface of the lithium metal at a molecular level. Compared with a method of directly applying the fiber layer onto the surface of the lithium metal, in which gaps are produced between the fiber layer and the lithium metal or another substrate due to volatilization of the solution during drying, the chemical crosslinking method used in this application provides particularly noticeable protection for the lithium metal negative electrode.

In a possible design, the polymer monomer is one of methyl methacrylate, styrene, acrylonitrile, and 1,3-dioxocyclopentane; the initiator is lithium difluorosulfonimide; the polymerization reaction takes place under protection of an inert gas atmosphere; a temperature of the polymerization reaction is 50°C to 60°C; and a time of the polymerization reaction is 20 min to 40 min.

This application further provides a secondary battery including the foregoing lithium metal negative electrode or a lithium metal negative electrode prepared using the foregoing preparation method.

This application further provides a battery module including the foregoing secondary battery.

This application further provides a battery pack including the foregoing battery module.

This application further provides an electric apparatus including at least one selected from the foregoing secondary battery, battery module, or battery pack.

It should be understood that the foregoing general description and the following detailed description are merely illustrative and are not intended to limit this application.

### Beneficial effects of the invention

### Beneficial effects

This application provides a lithium metal negative electrode including a substrate, lithium metal, and a fiber layer. The substrate includes a copper mesh. The copper mesh is plated with the lithium metal. The copper mesh and the fiber layer are composited. The copper mesh serves as a substrate support structure for supporting the lithium metal. In a charge and discharge cycle of a battery, the lithium metal tends to deposit in pores of the copper mesh, suppressing overgrowth of lithium dendrites, thereby avoiding safety risks such as irreversible capacity loss and separator puncture. The fiber layer is provided on the lithium metal negative electrode, the copper mesh is plated with the lithium metal, and then the fiber layer and the copper mesh are composited, so that the fiber layer can serve as a support structure of the copper mesh, further improving support stability of the copper mesh as well as protecting the surface of the lithium metal by keeping the air out.

### BRIEF DESCRIPTION OF DRAWINGS

### DESCRIPTION OF DRAWINGS

FIG. 1 is a schematic structural diagram of a lithium metal negative electrode according to a first embodiment of this application;
FIG. 2 is a schematic structural diagram of a substrate in a lithium metal negative electrode according to an embodiment of this application;
FIG. 3 is a schematic structural diagram of a substrate plated with lithium metal in a lithium metal negative electrode according to an embodiment of this application;
FIG. 4 is a schematic structural diagram of a lithium metal negative electrode according to a second embodiment of this application;
FIG. 5 shows structural formation and changes of a lithium metal negative electrode of this application during preparation;
FIG. 6 is a schematic diagram of a secondary battery according to an embodiment of this application;
FIG. 7 is an exploded view of the secondary battery according to the embodiment of this application in FIG. 6;
FIG. 8 is a schematic diagram of a battery module according to an embodiment of this application;
FIG. 9 is a schematic diagram of a battery pack according to an embodiment of this application;
FIG. 10 is an exploded view of the battery pack according to the embodiment of this application in FIG. 8;
FIG. 11 is a schematic diagram of an electric apparatus using a secondary battery as a power source according to an embodiment of this application; and
FIG. 12 is a comparison diagram of cycling performance test for button batteries prepared using different lithium metal negative electrodes.

### Reference signs:

1. substrate; 11. copper mesh; 12. copper foil; 2. lithium metal; 3. fiber layer; 4. battery pack; 5. upper box body; 6. lower box body; 7. battery module; 8. secondary battery; 81. housing; 82. electrode assembly; and 83. top cover assembly.

The accompanying drawings herein are incorporated into this specification and form a part of this specification, illustrate embodiments conforming to this application, and are intended to explain the principle of this application together with this specification.

### EMBODIMENTS OF THE INVENTION

### DESCRIPTION OF EMBODIMENTS

For better understanding of the technical solutions of this application, the following describes the embodiments of this application in detail with reference to the accompanying drawings.

Apparently, the described embodiments are merely some but not all of the embodiments of this application. All other embodiments obtained by persons of ordinary skill in the art based on the embodiments of this application without creative efforts shall fall within the protection scope of this application.

The terms used in the embodiments of this application are merely intended to describe specific embodiments, but not intended to limit this application. The singular forms preceded by "a/an", "the", and "such" used in the embodiments and the appended claims of this application are also intended to include their plural forms, unless otherwise specified clearly in the context.

It should be understood that, the term "and/or" used in this specification is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

It should be noted that the orientation terms such as "above", "under", "left", and "right" described in the embodiments of this application refer to orientations as seen from the angles shown in the accompanying drawings, and should not be understood as limitations on the embodiments of this application. In addition, in the context, it should be further understood that when an element is described as being "above" or "under" another element, that element may not only be directly connected "above" or "under" the another element, but also be indirectly connected "above" or "under" the another element through an intermediate element.

With the increasing popularity of portable electronic products such as notebook computers and mobile phones, as well as the development of electric vehicles and energy storage batteries, people have imposed higher requirements on power sources in a variety of aspects such as energy density, service life, and costs. Lithium-ion batteries, which are small in size, lightweight, environmentally friendly, and have high energy density, have been widely used and are gradually replacing conventional batteries such as zinc-manganese batteries, lead-acid batteries, nickel-cadmium batteries, and metal hydride batteries. As new generation of high-energy power sources, lithium-ion batteries have developed in response to the needs of economic development, resource utilization, and environmental protection. However, higher requirements are also imposed on the structure and performance of lithium-ion batteries, and positive and negative electrode materials in lithium-ion batteries face new challenges.

Currently, commercialized lithium-ion batteries with graphite as the negative electrode are struggling to meet the increasing demand for higher specific energy density. Lithium metal, with a theoretical specific capacity of 3860 mAh/g and a redox potential of -3.04 V (with respective to a standard hydrogen electrode), is an ideal negative electrode material for lithium-ion batteries and has great application prospects. However, lithium metal used as a negative electrode material for batteries poses safety risks. In a discharge process, lithium metal is dissolved into lithium ions, and in a charge process, lithium ions are reduced into lithium metal. In such reduction process, with continuous deposition and dissolution of lithium metal, lithium dendrites are formed due to non-uniform deposition of lithium during the reduction for a thermodynamic reason, and overgrown lithium dendrites not only damage a solid electrolyte interface film, but also cause continuous reaction between exposed lithium and an electrolyte, resulting in consumption of the electrolyte. Moreover, the lithium dendrites puncture the separator, leading to a short circuit in a battery and thus causing a fire or even an explosion. In addition, lithium dendrites are likely to fall off an electrode and thus cannot be utilized effectively, resulting in formation of "dead lithium", thereby causing capacity loss of the battery.

To address the issues that lithium dendrites are easily produced in an existing negative electrode of a battery, and overgrown lithium dendrites damage the solid electrolyte interface film, may also puncture the separator, causing a short circuit in the battery, or may become "dead lithium", causing irreversible capacity loss, the applicant has found through research that a substrate with a mesh structure may be plated with lithium metal to form a lithium metal negative electrode, so that in a charge and discharge cycle of the battery, lithium tends to deposit in mesh pores, suppressing overgrowth of lithium dendrites, thereby avoiding the problems such as separator puncture and irreversible capacity loss caused by the overgrowth of lithium dendrites.

Based on the foregoing considerations, to resolve the existing problems that overgrown lithium dendrites damage the solid electrolyte interface film, may also puncture the separator, causing a short circuit in the battery, or may become "dead lithium", causing irreversible capacity loss, the inventors have designed, through in-depth research, a lithium metal negative electrode. The lithium metal negative electrode includes a substrate, lithium metal, and a fiber layer. The substrate includes a copper mesh. The copper mesh is plated with the lithium metal. The copper mesh and the fiber layer are composited.

In such lithium metal negative electrode, the copper mesh serves as the substrate and is plated with the lithium metal on the surface, so that the copper mesh supports the lithium metal. A lithium battery using such lithium metal negative electrode can have an effectively prolonged cycle life. In addition, during cycling, the lithium metal tends to deposit in the pores of the copper mesh, suppressing overgrowth of lithium dendrites, thereby avoiding the risks such as separator puncture and irreversible capacity loss. The fiber layer is provided on the lithium metal negative electrode, the copper mesh is plated with the lithium metal, and then the fiber layer and the copper mesh are composited, so that the fiber layer can serve as a support structure of the copper mesh, further improving support stability of the copper mesh as well as protecting the surface of the lithium metal by keeping the air out.

The lithium metal negative electrode disclosed in the embodiments of this application can be used for preparing a cell, which specifically may be but is not limited to a wound cell. The lithium metal negative electrode disclosed in the embodiments of this application may also be used in, but not limited to, energy storage devices such as lithium-ion batteries. In a charge and discharge cycle of a battery, overgrowth of lithium dendrites can be suppressed, thereby avoiding the problems such as separator puncture and irreversible capacity loss caused by the overgrowth of lithium dendrites.

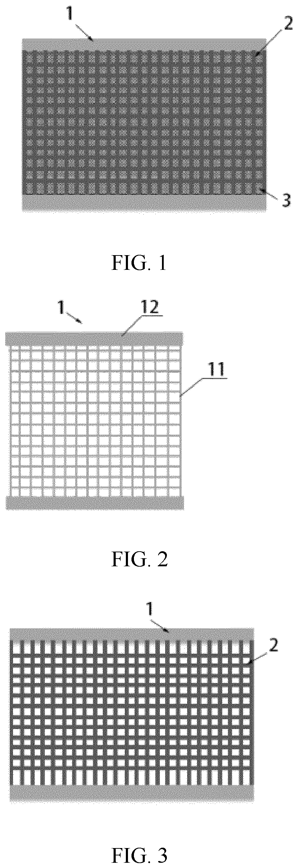

According to some embodiments of this application, as shown in FIG. 1, FIG. 2, and FIG. 3, FIG. 1 is a schematic structural diagram of a lithium metal negative electrode according to some embodiments of this application, FIG. 2 is a schematic structural diagram of a substrate in a lithium metal negative electrode according to some embodiments of this application, and FIG. 3 is a schematic structural diagram of a substrate plated with lithium metal in a lithium metal negative electrode according to some embodiments of this application. This application provides a lithium metal negative electrode. The lithium metal negative electrode includes a substrate 1, lithium metal 2, and a fiber layer 3. The substrate 1 includes a copper mesh 11. The copper mesh 11 is plated with the lithium metal 2. The copper mesh 11 and the fiber layer 3 are composited.

The lithium metal 2 is a metal element with the highest metallic reactivity and the lowest density among known elements. Lithium has quite high charge density and a stable helium-like double-electron layer. Lithium is likely to polarize other molecules or ions, but is less likely to be polarized itself. The lithium metal 2 has a theoretical specific capacity of 3860 mAh/g and a redox potential of -3.04 V (with respect to a standard hydrogen electrode).

The substrate 1 supports the lithium metal 2. The substrate 1 includes the copper mesh 11. The copper mesh 11 is plated with the lithium metal 2, and the copper mesh 11 has a pore structure. In a charge and discharge cycle of a battery, the lithium metal 2 tends to deposit in pores of the copper mesh 11, suppressing overgrowth of lithium dendrites, thereby avoiding the risks such as separator puncture and irreversible capacity loss. In some specific embodiments, before plated with the lithium metal 2, the copper mesh 11 is soaked and cleaned in a weak acid such as 1% to 2% dilute hydrochloric acid for 10 min to 15 min, so as to remove a surface oxide layer.

The fiber layer 3 is a layer structure with pores and does not react with either the lithium metal 2 or an electrolyte. The fiber layer 3 and the copper mesh 11 are composited. The fiber layer 3 can serve as a support structure of the copper mesh 11, further improving the support stability of the copper mesh as well as protecting the lithium metal 2. In some specific embodiments, the fiber layer 3 may be a glass fiber layer, a polypropylene fiber layer, a polyacrylonitrile fiber layer, or a polyester fiber layer, but is not limited to these types.

The copper mesh 11 serves as a substrate support structure for supporting the lithium metal 2. In a charge and discharge cycle of the battery, the lithium metal 2 tends to deposit in pores of the copper mesh 11, suppressing overgrowth of lithium dendrites, thereby avoiding the risks such as separator puncture and irreversible capacity loss. The fiber layer 3 is provided on the lithium metal negative electrode, the copper mesh 11 is plated with the lithium metal 2, and then the fiber layer 3 and the copper mesh 11 are composited, so that the fiber layer 3 can serve as a support structure of the copper mesh 11, further improving the support stability of the copper mesh 11 as well as protecting the lithium metal 2.

According to some specific embodiments of this application, the copper mesh 11 has a pore area of 1×10⁻⁴ mm² to 4×10⁻⁴ mm².

The pore area of the copper mesh 11 refers to an area of a single pore in the copper mesh 11. The pore area may be 1×10⁻⁴ mm², 2×10⁻⁴ mm², 3×10⁻⁴ mm², 4×10⁻⁴ mm², or the like, or certainly may be another value within the foregoing range, which is not limited herein.

Reasonable selection of the pore area of the copper mesh 11 can not only guarantee energy density of the negative electrode, but also provide deposition space for the lithium metal 2. When the pore area of the copper mesh 11 is less than 1×10⁻⁴ mm², the pores of the copper mesh 11 are too small to provide sufficient deposition space for the lithium metal 2, failing to effectively suppress growth of lithium dendrites. When the pore area of the copper mesh 11 is greater than 4×10⁻⁴ mm², the negative electrode has insufficient strength, easily causing problems such as collapse and deformation.

According to some specific embodiments of this application, a single copper wire in the copper mesh 11 has a diameter of 1 mm to 2 mm.

The diameter of a single copper wire in the copper mesh 11 may be 1 mm, 1.2 mm, 1.4 mm, 1.6 mm, 1.8 mm, 2 mm, or the like, or certainly may be another value within the foregoing range, which is not limited herein.

Reasonable selection of the diameter of a single copper wire in the copper mesh 11 can effectively guarantee strength of the copper mesh 11, thus providing stable support for the lithium metal 2.

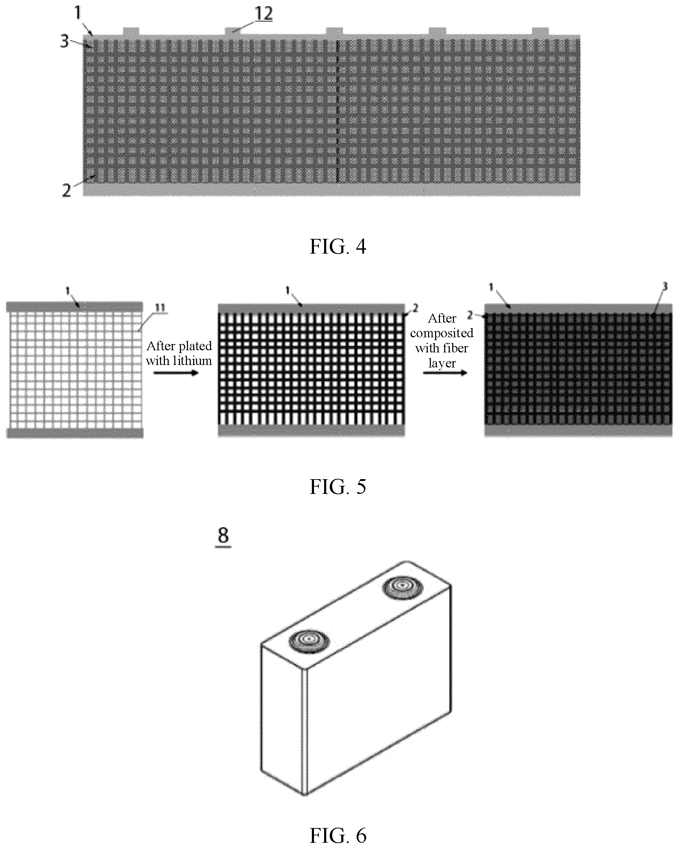

According to some specific embodiments of this application, as shown in FIG. 2 and FIG. 4, the substrate 1 further includes copper foils 12, where the copper foils 12 are connected to two sides of the copper mesh 11.

The copper foil 12 is formed by forging copper with a specified proportion of another metal, and is a cathodic electrolytic material with electrical conductivity. In some specific embodiments, as shown in FIG. 4, the copper foil 12 can serve as a current collector and be cut into a negative electrode tab.

The copper foils 12 provided on the two sides of the copper mesh 11 can serve as current collectors and be cut into negative electrode tabs for preparation of a lithium negative electrode plate of a wound structure.

According to some specific embodiments of this application, the fiber layer 3 has a thickness of 1 mm to 2 mm.

The thickness of the fiber layer 3 may be 1 mm, 1.2 mm, 1.4 mm, 1.6 mm, 1.8 mm, 2 mm, or the like, or certainly may be another value within the foregoing range, which is not limited herein.

Reasonable selection of the thickness of the fiber layer 3 can provide better protection for the lithium metal 2.

According to some specific embodiments of this application, this application further provides a preparation method of lithium metal negative electrode. The preparation method includes the following steps:
preparing a copper mesh 11;
performing surface treatment on the copper mesh 11 to remove a surface oxide layer, and then plating the copper mesh 11 with lithium metal 2; and
compositing a fiber layer 3 and the copper mesh 11 plated with the lithium metal 2 to obtain a lithium metal negative electrode.

The size of the copper mesh 11 can be adaptively designed according to an actual application scenario. The surface of a copper material is prone to oxidation to form an oxide layer. The presence of the oxide layer affects the electrical conductivity of the copper mesh 11 and also affects the plating effect of the lithium metal 2 on the copper mesh 11. Therefore, before the copper mesh 11 is plated with the lithium metal 2, the copper mesh 11 requires surface treatment for removing the surface oxide layer. A method for the surface treatment may be a physical method or a chemical method. In some specific embodiments, the method for the surface treatment is a chemical method. Specifically, the chemical method may be that the copper mesh 11 is soaked and cleaned in a weak acid such as 1% to 2% dilute hydrochloric acid for 10 min to 15 min.

The copper mesh 11, as a substrate, is plated with the lithium metal 2 on the surface, and then the fiber layer 3 and the copper mesh 11 are composited. During cycling, lithium tends to deposit in the pores of the copper mesh 11, suppressing overgrowth of lithium dendrites and avoiding risks such as separator puncture.

According to some specific embodiments of this application, the copper mesh 11 is plated with the lithium metal 2 at a speed of 20 µA to 40 µA for 4 h to 8 h.

The copper mesh 11 may be plated with the lithium metal 2 at a speed of 20 µA, 25 µA, 30 µA, 35 µA, 40 µA, or the like for 4 h, 5 h, 6 h, 7 h, 8 h, or the like. Certainly, the speed and time may be other values within the forgoing ranges, which are not limited herein.

Reasonable selection of the speed for plating the copper mesh 11 with the lithium metal 2 can ensure uniform lithium plating and avoid falling of the lithium metal caused by non-uniform lithium plating.

According to some specific embodiments of this application, the compositing is implemented through a rolling method or a chemical crosslinking method.

Rolling refers to a process for shaping various complicated pieces by using the principle of rolling extrusion, depending on the plastic movement characteristic of materials. The rolling in this application specifically refers to a process for compositing a ready-made fiber layer 3 and the copper mesh 11 through rolling extrusion.

Chemical crosslinking refers to a process for forming macromolecules of a network or three-dimensional structure by linking macromolecular chains through chemical bonds under the action of light, heat, high-energy radiation, mechanical force, ultrasonic wave, a crosslinking agent, and the like. The chemical crosslinking in this application specifically refers to a process in which polymer monomers for preparing the fiber layer 3 undergo a polymerization reaction at a specific temperature under the action of an initiator to form the fiber layer 3, and then the fiber layer 3 is composited onto the copper mesh 11.

The fiber layer 3 and the copper mesh 11 are composited through a rolling method or a chemical crosslinking method, so that the copper mesh 11 is supported and the lithium metal 2 is protected.

According to some specific embodiments of this application, the chemical crosslinking method includes the following steps.

An initiator and polymer monomers are dispersed in an organic solvent to produce a mixed solution; and the mixed solution is applied onto the copper mesh 11 plated with the lithium metal 2; where under the action of the initiator, a polymerization reaction takes place, and the fiber layer 3 is formed on the lithium metal.

The polymer monomer may be selected from acrylic ester, cycloalkane, olefin, and acrylonitrile. In some specific embodiments, the polymer monomer may be one of methyl methacrylate, styrene, acrylonitrile, and 1,3-dioxocyclopentane.

The organic solvent may be selected from alkane, olefin, alcohol, aldehyde, amine, ester, ether, ketone, aromatic hydrocarbon, hydrogenated hydrocarbon, terpene hydrocarbon, halogenated hydrocarbon, heterocyclic compound, nitrogen-containing compound, sulfur-containing compound, and the like. In some specific embodiments, the organic solvent may be 1,2-dimethoxyethane or acetone.

The initiator refers to a type of compound that is easily decomposed by heat into radicals (that is, primary radicals), which can be used to initiate free radical polymerization and copolymerization reactions of olefinic and diolefinic monomers, as well as crosslinking curing and polymer crosslinking reactions of unsaturated polyesters. The initiator may be an organic peroxide initiator, an inorganic peroxide initiator, an azo initiator, or a redox initiator. In some specific embodiments, the initiator is lithium difluorosulfonimide. Compared with other initiators, lithium difluorosulfonimide does not bring new impurities into a battery system.

Spaces between meshes of the copper mesh 11 are used for accurately positioning the polymer monomers on the surface of the lithium metal 2, and the polymer monomers, with the aid of the initiator, can form a dense protective layer on the surface of the lithium metal at a molecular level. Compared with a method of directly applying the fiber layer 3 onto the surface of the lithium metal 2, in which gaps are produced between the fiber layer and the lithium metal 2 or another substrate due to volatilization of the solution during drying, the chemical crosslinking method used in this application provides particularly noticeable protection for the lithium metal 2 negative electrode.

According to some specific embodiments of this application, the polymerization reaction takes place under protection of an inert gas atmosphere. A temperature of the polymerization reaction is 50°C to 60°C. A time of the polymerization reaction is 20 min to 40 min.

The inert gas can avoid direct contact between reactants and air, thus avoiding production of byproducts during the reaction. The inert gas may be helium, neon, argon, krypton, xenon, radon, or the like.

The temperature of the polymerization reaction may be 50°C, 52°C, 54°C, 56°C, 58°C, 60°C, or the like, or certainly may be another value within the foregoing range, which is not limited herein.

The time of the polymerization reaction may be 20 min, 25 min, 30min, 35 min, 40 min, or the like, or certainly may be another value within the foregoing range, which is not limited herein.

Controlling the time, temperature and atmosphere of the polymerization reaction in the chemical crosslinking process allows for more complete chemical crosslinking and enables the fiber layer 3 to be composited onto the copper mesh 11 more stably and uniformly.

According to some specific embodiments of this application, this application further provides a cell. The cell includes the lithium metal negative electrode disclosed in this application.

The cell may be a wound cell or a laminated cell. In some specific embodiments, the cell is a wound cell. A preparation method of such wound cell includes the following steps: (1) adding copper fluoride into a lithium nitrate solution to produce a mixed solution, and soaking the lithium metal negative electrode of this application in the mixed solution to form a surface passivation film for avoiding contact between the lithium metal and air during preparation; and (2) cutting the copper foils 12 on the substrate 1 of the lithium metal negative electrode into tabs according to a die-cutting size, and preparing a cell of a wound structure by using the tabs together with a positive electrode and a separator.

According to some specific embodiments of this application, this application further provides a secondary battery.

Normally, the secondary battery includes a positive electrode plate, a negative electrode plate, an electrolyte, and a separator. In a charge and discharge process of the battery, active ions intercalate and deintercalate between the positive electrode plate and the negative electrode plate. The electrolyte conducts ions between the positive electrode plate and the negative electrode plate. The separator is disposed between the positive electrode plate and the negative electrode plate to mainly prevent a short circuit between the positive and negative electrodes and to allow ions to pass through.

### [Positive electrode plate]

The positive electrode plate includes a positive electrode current collector and a positive electrode film layer disposed on at least one surface of the positive electrode current collector, where the positive electrode film layer includes the positive electrode active material according to the first aspect of this application.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a well-known positive electrode active material used for batteries in the art. For example, the positive electrode active material may include at least one of the following materials: olivine-structured lithium-containing phosphate, lithium transition metal oxide, and respective modified compounds thereof. However, this application is not limited to these materials, and may alternatively use other conventional materials that can be used as positive electrode active materials for batteries. One of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.1}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to produce a positive electrode slurry; and the positive electrode slurry is applied onto the positive electrode current collector, followed by processes such as drying and cold pressing to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for batteries in the art. For example, the negative electrode active material may include at least one of the following materials: artificial graphite, natural graphite, soft carbon, hard carbon, silicon-based material, tin-based material, and lithium titanate. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, this application is not limited to these materials, and may alternatively use other conventional materials that can be used as negative electrode active materials for batteries. One of these negative electrode active materials may be used alone, or two or more of them may be used in combination.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be at least one selected from superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode plate may be prepared in the following manner: the foregoing constituents used for preparing the negative electrode plate, for example, the negative electrode active material, the conductive agent, the binder, and any other constituent, are dispersed in a solvent (for example, deionized water) to produce a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate. The electrolyte is not specifically limited in this application, and may be selected as required. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be at least one selected from lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluoroxalate borate, lithium bisoxalatoborate, lithium difluorobisoxalate phosphate, and lithium tetrafluoro oxalate phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, methyl ethyl sulfone, and diethyl sulfone.

In some embodiments, the electrolyte further optionally includes an additive. For example, the additive may include a negative electrode film-forming additive and a positive electrode film-forming additive, or may include an additive capable of improving some performance of the battery, for example, an additive for improving overcharge resistance performance of the battery and an additive for improving high-temperature performance or low-temperature performance of the battery.

### [Separator]

In some embodiments, the secondary battery further includes a separator. The separator is not limited to any particular type in this application, and may be any well-known porous separator with good chemical stability and mechanical stability.

In some embodiments, a material of the separator may be at least one selected from glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

This application does not impose any special limitation on a shape of the secondary battery, and the secondary battery may be cylindrical, rectangular, or of any other shapes. For example, FIG. 6 shows a secondary battery 8 of a rectangular structure as an example.

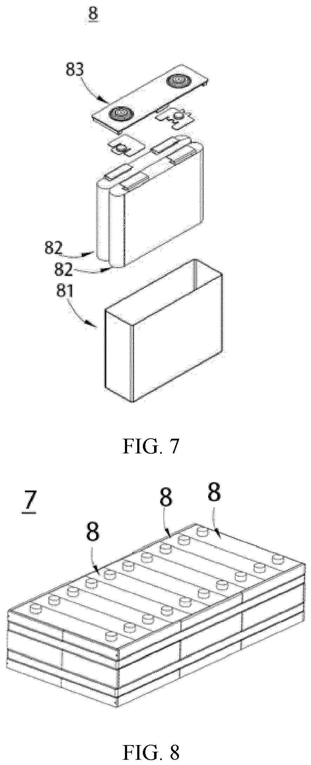

In some embodiments, referring to FIG. 7, the outer package may include a housing 81 and a cover plate 83. The housing 81 may include a base plate and side plates connected to the base plate, and the base plate and the side plates enclose an accommodating cavity. The housing 81 has an opening communicating with the accommodating cavity, and the cover plate 83 can cover the opening to close the accommodating cavity. The positive electrode plate, the negative electrode plate, and the separator may be made into an electrode assembly 82 through winding or lamination. The electrode assembly 82 is packaged in the accommodating cavity. The electrolyte infiltrates the electrode assembly 82. The secondary battery 8 may include one or more electrode assemblies 82, and persons skilled in the art can make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 8 shows a battery module 7 as an example. Referring to FIG. 8, in the battery module 7, a plurality of secondary batteries 8 may be sequentially arranged along a length direction of the battery module 7. Certainly, the secondary batteries may alternatively be arranged in any other manners. Further, the plurality of secondary batteries 8 may be fastened through fasteners.

In some embodiments, the battery module 7 may further include an enclosure with an accommodating space, and the plurality of secondary batteries 8 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

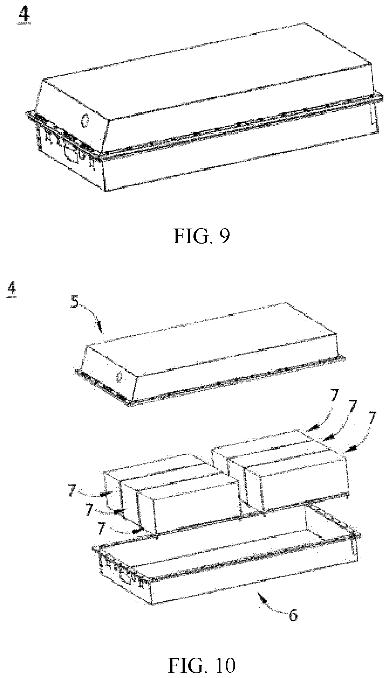

FIG. 9 and FIG. 10 show a battery pack 4 as an example. Referring to FIG. 9 and FIG. 10, the battery pack 4 may include a battery box and a plurality of battery modules 7 arranged in the battery box. The battery box includes an upper box body 5 and a lower box body 6. The upper box body 5 can be engaged with the lower box body 6 to create an enclosed space for accommodating the battery modules 7. The plurality of battery modules 7 may be arranged in the battery box in any manner.

In addition, this application further provides an electric apparatus. The electric apparatus includes at least one of the secondary battery, battery module, or battery pack provided in this application. The secondary battery, battery module, or battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, battery module, or battery pack may be selected for the electric apparatus depending on requirements for using the electric apparatus.

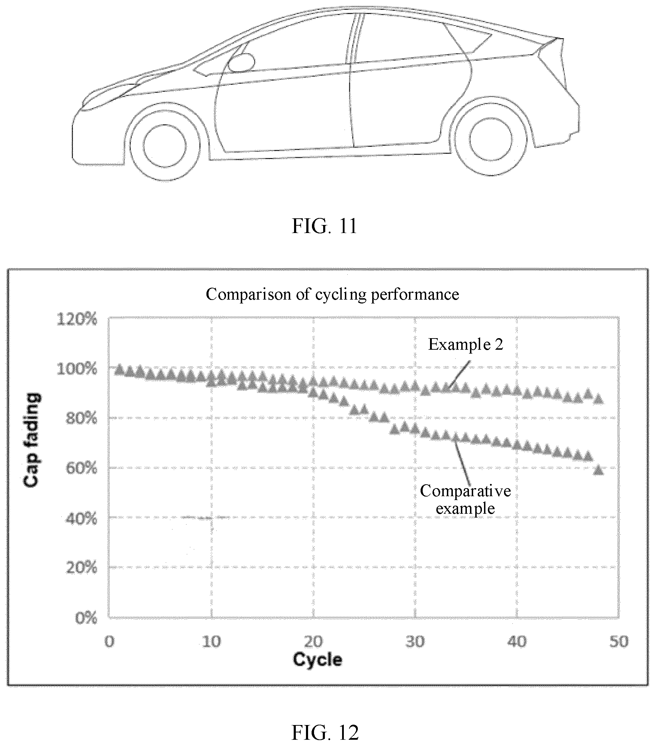

FIG. 11 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

### Examples

The following describes performance evaluation performed based on examples and comparative examples of the lithium metal negative electrode in this application.

### Example 1

### 1. Preparation method of lithium metal negative electrode

Structural changes during preparation are shown in FIG. 5.

S1. A copper mesh 11 with an appropriate width was prepared, where the copper mesh had a pore size of 1×10⁻⁴ mm²; and
the copper mesh 11 was soaked and cleaned in a weak acid such as 1% to 2% dilute hydrochloric acid for 10 min to 15 min to remove a surface oxide layer, and then the copper mesh 11 was plated with lithium metal 2.

S2. A fiber layer 3 and the copper mesh 11 plated with the lithium metal 2 were composited through rolling, the thickness of the fiber layer 3 being 1 mm to 2 mm. Parameters of rolling: speed was 1 cm/s to 10 cm/s, and force was 50 N to 200 N.

### Example 2

### 1. Preparation method of lithium metal negative electrode

S1. A copper mesh 11 with an appropriate width was prepared, where the copper mesh 11 had a pore area of 1×10⁻⁴ mm²; and
the copper mesh 11 was soaked and cleaned in a weak acid such as 1% to 2% dilute hydrochloric acid for 10 min to 15 min to remove a surface oxide layer, and then the copper mesh 11 was plated with lithium metal 2.

S2. A fiber layer 3 and the copper mesh 11 plated with the lithium metal 2 were composited through crosslinking, the thickness of the fiber layer 3 being 1 mm to 2 mm.

In the chemical crosslinking process, lithium difluorosulfonimide was used as an initiator, methyl methacrylate was used as polymer monomers, and 1,2-dimethoxyethane was used as an organic solvent. In the crosslinking process, a mixed solution included compositions proportioned as follows: 0.1 wt% to 1wt% initiator, 10wt% to 30wt% polymer monomer, and 69wt% to 89.9wt% organic solvent. A polymerization reaction took place under protection of an inert gas atmosphere. A temperature of the polymerization reaction was 50°C to 60°C, and a time of the polymerization reaction was 30 min.

### Example 3

The lithium metal negative electrode in this example was the same as that in Example 2 except the following technical solution: the copper mesh 11 had a pore area of 4×10⁻⁴ mm².

### Example 4

The lithium metal negative electrode in this example was the same as that in Example 2 except the following technical solution: the copper mesh 11 had a pore area of 3×10⁻⁴ mm².

### Comparative example

A conventional lithium metal negative electrode was used, which was a lithium plate with a thickness of 0.5 mm.

Assembly of full button battery: NMC 523, acetylene black SP, and PVDF were mixed at a mass ratio of 80:10:10 and added with N-methyl pyrrolidone, the resulting mixture was stirred for 2 h to produce a slurry, the slurry was uniformly applied onto a surface of an aluminum foil using a coater, and then the aluminum foil was subjected to air-blowing drying in an oven at 120°C for 120 min to obtain a button battery positive electrode. The lithium metal negative electrodes and the prepared button battery positive electrodes in Examples 1-4 and Comparative examples 1-3 were separately assembled into button batteries using a conventional lithium battery assembly method, where 1 mol/L LiTFSI was used as the electrolyte.

The prepared button batteries were subjected to a cycling performance test for battery, and test results obtained are shown in Table 1 and FIG. 12. Table 1 lists capacity retention rates after 50 cycles of the button batteries prepared using the lithium metal negative electrodes of Examples 1-4 and comparative example as the negative electrode materials. FIG. 12 is a comparison diagram of cycling performance the button batteries prepared using the lithium metal negative electrodes of Example 2 and comparative example as the negative electrode materials. A test device was LAND (CT2001A), a charge and discharge voltage range was 3.0 V to 4.3 V, and a test current was 0.1C.

**Table 1 Comparison table of capacity retention rates after 50 cycles of button batteries prepared using different lithium metal negative electrodes as negative electrode materials**

| Lithium metal negative electrode | Example 1 | Example 2 | Example 3 | Example 4 | Comparative example |
|---|---|---|---|---|---|
| Capacity retention rate after 50 cycles of button battery | 82.0% | 81.3% | 81.5% | 81.8% | 59.7% |

It can be seen from the results in Table 1 that the capacity retention rates after 50 cycles of the button batteries prepared using the lithium metal negative electrodes in Examples 1-4 as negative electrode materials are respectively 82.0%, 81.3%, 81.5%, and 81.8%, and the capacity retention rate after 50 cycles of the button battery prepared using the lithium metal negative electrode in Comparative example 1 as the negative electrode material is 59.7%. With reference to comparison curves in FIG. 12, it can be seen that the battery prepared using the lithium metal negative electrode of this application has excellent cycling performance.

In conclusion, it should be noted that the foregoing embodiments are merely for description of the technical solutions of this application rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A lithium metal negative electrode, wherein the lithium metal negative electrode comprises a substrate (1), lithium metal (2), and a fiber layer (3); the substrate (1) comprises a copper mesh (11); the copper mesh (11) is plated with the lithium metal (2); and the copper mesh (11) and the fiber layer (3) are composited.

2. The lithium metal negative electrode according to claim 1, wherein the copper mesh (11) has a pore area of 1×10⁻⁴ mm² to 4×10⁻⁴ mm².

3. The lithium metal negative electrode according to claim 1 or 2, wherein a single copper wire in the copper mesh (11) has a diameter of 1 mm to 2 mm.

4. The lithium metal negative electrode according to any one of claims 1 to 3, wherein the substrate (1) further comprises copper foils (12), the copper foils (12) being connected to two sides of the copper mesh (11).

5. The lithium metal negative electrode according to any one of claims 1 to 4, wherein the fiber layer (3) has a thickness of 1 mm to 2 mm.

6. A preparation method of lithium metal negative electrode, comprising the following steps:
preparing a copper mesh (11);
performing surface treatment on the copper mesh (11) to remove a surface oxide layer, and then plating the copper mesh (11) with lithium metal (2); and
compositing a fiber layer (3) and the copper mesh (11) plated with the lithium metal (2) to obtain a lithium metal negative electrode.

7. The preparation method according to claim 6, wherein the copper mesh (11) is plated with the lithium metal (2) at a speed of 20 µA to 40 µA for 4 h to 8 h.

8. The preparation method according to claim 6 or 7, wherein the fiber layer (3) is a glass fiber layer, a polypropylene fiber layer, a polyacrylonitrile fiber layer, or a polyester fiber layer.

9. The preparation method according to any one of claims 6 to 8, wherein the compositing is implemented through a rolling method or a chemical crosslinking method.

10. The preparation method according to claim 9, wherein the chemical crosslinking method comprises the following steps:
dispersing an initiator and polymer monomers in an organic solvent to produce a mixed solution; and applying the mixed solution onto the copper mesh (11) plated with the lithium metal (2); wherein under the action of the initiator, a polymerization reaction takes place, forming the fiber layer (3) on the copper mesh (11).

11. The preparation method according to claim 10, wherein the polymer monomer is one of methyl methacrylate, styrene, acrylonitrile, and 1,3-dioxocyclopentane; the initiator is lithium difluorosulfonimide; the polymerization reaction takes place under protection of an inert gas atmosphere; a temperature of the polymerization reaction is 50°C to 60°C; and a time of the polymerization reaction is 20 min to 40 min.

12. A secondary battery, comprising the lithium metal negative electrode according to any one of claims 1 to 5 or a lithium metal negative electrode prepared using the preparation method according to any one of claims 6 to 11.

13. A battery module, comprising the secondary battery according to claim 12.

14. A battery pack, comprising the battery module according to claim 13.

15. An electric apparatus, comprising at least one of the secondary battery according to claim 12, the battery module according to claim 13, or the battery pack according to claim 14.
